# EUROPEAN PATENT APPLICATION

(11) **EP 4 783 115 A2**
(43) Date of publication of application: **29.07.2026**
(21) Application number: 26152916.8
(22) Date of filing: 20.01.2026
(51) Int. Cl.: G06T 7/73

(54) **BEACON DETECTION SYSTEM**

(30) Priority: 24.01.2025 US 202519036852
(71) Applicant: The Boeing Company, Arlington, VA 22202 (US)
(72) Inventor: VIDAL FRANCO, JOSE IGNACIO, Arlington, 22202 (US); PALOMAR, MARTA, Arlington, 22202 (US); TOLSTOV, ANDREY, Arlington, 22202 (US)
(74) Representative: Sandri, Sandro

(57) **Abstract**

A beacon detection system includes a camera, a motion detection device associated with the camera, and one or more processors. The one or more processors process, using a motion compensation technique, a video feed captured by the camera and determine light flickering frequency information associated with a plurality of regions of the video feed. The one or more processors determine, using a filtering technique associated with a beacon frequency, and based on the light flickering frequency information, a set of one or more regions, of the plurality of regions of the video feed, that are associated with the beacon frequency. The one or more processors provide a filtered video feed that includes video content of the video feed that is only associated with the set of one or more regions of the video feed.

## Description

### FIELD

The present disclosure relates generally to a beacon detection system and to a beacon detection system of an aircraft.

### BACKGROUND

A beacon is a light source that emits light with one or more features (e.g., brightness, color, or modulation pattern), which allows the beacon to be uniquely identifiable (e.g., as a beacon, as compared to other light sources). A beacon can be used as a reference point for an aircraft, or another type of vehicle, to facilitate navigation, positioning, alignment, or other types of operations.

### SUMMARY

An embodiment of the present disclosure provides, a beacon detection system of an aircraft comprises a camera with a field of view that is associated with an attitude of the aircraft; a motion detection device associated with the camera; and one or more processors configured to: process, using a motion compensation technique, a video feed captured by the camera; determine light flickering frequency information associated with a plurality of regions of the video feed; determine, using a filtering technique associated with a beacon frequency, and based on the light flickering frequency information, a set of one or more regions, of the plurality of regions of the video feed, that are associated with the beacon frequency; and provide, to a flight management system of the aircraft, a filtered video feed that includes video content of the video feed that is only associated with the set of one or more regions of the video feed.

Another embodiment of the present disclosure provides, a non-transitory computer-readable medium storing a set of instructions comprises one or more instructions that, when executed by one or more processors of a system of an aircraft, cause the system to: determine light flickering frequency information associated with a plurality of regions of a video feed captured by a camera; determine, using a filtering technique associated with a particular frequency, and based on the light flickering frequency information, a set of one or more regions, of the plurality of regions of the video feed, that are associated with the particular frequency; and provide a filtered video feed that includes video content of the video feed that is only associated with the set of one or more regions of the video feed.

Yet another embodiment of the present disclosure provides a method performed by a system of an aircraft comprises determining light flickering frequency information associated with a plurality of regions of a video feed captured by a camera; determining based on the light flickering frequency information, a set of one or more regions, of the plurality of regions of the video feed, that are associated with a beacon frequency; and providing video content of the video feed that is associated with the set of one or more regions of the video feed.

The features, functions, and advantages that have been discussed can be achieved independently in various implementations or may be combined in yet other implementations further details of which can be seen with reference to the following description and drawings.

### BRIEF DESCRIPTION OF THE DRAWINGS

Figs. 1A-1F are diagrams of an example implementation associated with a beacon detection system.
Fig. 2 is a diagram of an example environment in which systems and/or methods described herein are implemented.
Fig. 3 is a diagram of example components of a device associated with a beacon detection system.
Fig. 4 is a flowchart of an example process associated with a beacon detection system.

### DETAILED DESCRIPTION

The following detailed description of example implementations refers to the accompanying drawings. The same reference numbers in different drawings may identify the same or similar elements.

Using a camera-based system to identify a beacon in an environment can be challenging when multiple light sources are present, because features of light emanating from the other light sources (e.g., brightness, color, or modulation patterns) overlap or create visual noise that obscures distinct features of light emitted by the beacon. Additionally, reflections, glare, or dynamic lighting conditions in the environment can interfere with the distinct features of the light emitted by the beacon, making it harder for the system to reliably differentiate the light emitted by the beacon from other light. This can result in an inaccurate identification, or a failure of identification, of the beacon by the system.

When the system is incorporated into an aircraft, an inaccurate identification, or a failure of identification, of the beacon can cause errors in navigation, positioning, alignment, or other types of operations of the aircraft with respect to the beacon. For example, the aircraft deviates from a flight path associated with the beacon, and thereafter, once a more accurate identification of the beacon is made, the aircraft makes corrective maneuvers to realign the aircraft with the flight path. This increases a workload of a flight management system and other guidance systems of the aircraft to calculate and implement the corrective maneuvers, and can increase a fuel consumption of the aircraft to perform the corrective maneuvers.

Some implementations described herein include at least one beacon. Each beacon is configured to emit modulated light (e.g., blinking light), which is modulated at a beacon frequency. The beacon frequency serves as a unique identifier, which distinguishes the light emitted by the beacon from light that emanates from other light sources. For example, the beacon frequency is configured to be 100 Hertz (Hz), or another frequency, that is greater than a frequency of typical modulated light sources (e.g., that have a modulation frequency within a range of 50-60 Hz). In this way, the light emitted by the beacon is uniquely identifiable as "beacon light" because no other light source modulates light at the beacon frequency.

Additionally, some implementations described herein include a beacon detection system. The beacon detection system includes a camera that is configured to capture a video feed. In some implementations, a scene that includes at least one beacon is within a field of view of the camera, and thus, the camera captures a video feed that includes a plurality of regions (e.g., a plurality of pixel clusters), wherein one or more regions depict the at least one beacon. That is, the one or more regions of the video feed depict light that is emitted by the at least one beacon and that is therefore modulated at the beacon frequency.

The beacon detection system further includes one or more processors, which obtain the video feed (e.g., from the camera). The beacon detection system (e.g., using the one or more processors) processes the video feed (e.g., using a motion compensation technique), such as to cause the video feed to be stabilized. In some implementations, the beacon detection system further includes a motion detection device that is configured to capture motion information associated with a motion of the camera, such as a shake, or a vibration, along with other examples, of the camera when the camera captures the video feed. Accordingly, the beacon detection system (e.g., using the one or more processors) uses the motion information to process the video feed and thereby cause the video feed to be stabilized.

In some implementations, the beacon detection system (e.g., using the one or more processors) determines light flickering frequency information associated with the plurality of regions of the video feed. The light flickering frequency information includes, for example, temporal intensity variation data for each region of the video feed, which indicates how much an intensity of light depicted by the region appears to vary (e.g., flicker) during a time period. In other words, the temporal intensity variation data indicates a modulation frequency of light depicted by the region. Accordingly, the beacon detection system determines (e.g., using the one or more processors), such as by using a filtering technique, a set of one or more regions, of the plurality of regions, of the video feed that are associated with the beacon frequency. Thus, the set of one or more regions depict light that is modulated at the beacon frequency and that, therefore, was emitted by the at least one beacon of the scene.

The beacon detection system (e.g., using the one or more processors) then provides a filtered video feed (e.g., based on the light flickering frequency information), which includes video content of the video feed that is only associated with the set of one or more regions of the video feed. In this way, the filtered video depicts video content of the video feed associated with the set of one or more regions of the video feed that depict light that is modulated at the beacon frequency (and that, therefore, was emitted by the at least one beacon of the scene).

In this way, the beacon detection system, by identifying light that is modulated at the beacon frequency in the video feed, is able to provide a filtered video feed that accurately identifies the at least one beacon in the scene, regardless of an amount or distribution of light that emanates from other light sources in the scene. Thus, the beacon detection system is less likely to inaccurately identify, or fail to identify, the at least one beacon (as compared to other camera-based systems not configured to identify beacon light based on the beacon frequency).

In some implementations, the beacon detection system is included in an aircraft, and thus providing a filtered video feed that accurately identifies the at least one beacon in the scene results in a reduced number of errors in navigation, positioning, alignment, or other types of operations of the aircraft with respect to the at least one beacon. For example, the beacon detection system provides the filtered video feed to a flight management system (FMS) of the aircraft, which causes the aircraft to automatically, and accurately, perform one or more positioning operations (e.g., based on the filtered video feed) in association with the at least one beacon. Because the video feed accurately identifies the at least one beacon, the aircraft, for example, is less likely to deviate from a flight path associated with the at least one beacon. Therefore, corrective maneuvers to realign the aircraft with the flight path are therefore less likely to be needed. A workload of the FMS, as well as other guidance systems of the aircraft, to calculate and implement any corrective maneuvers is thus reduced, and a fuel efficiency of the aircraft is improved by the aircraft not performing, or performing fewer, corrective maneuvers.

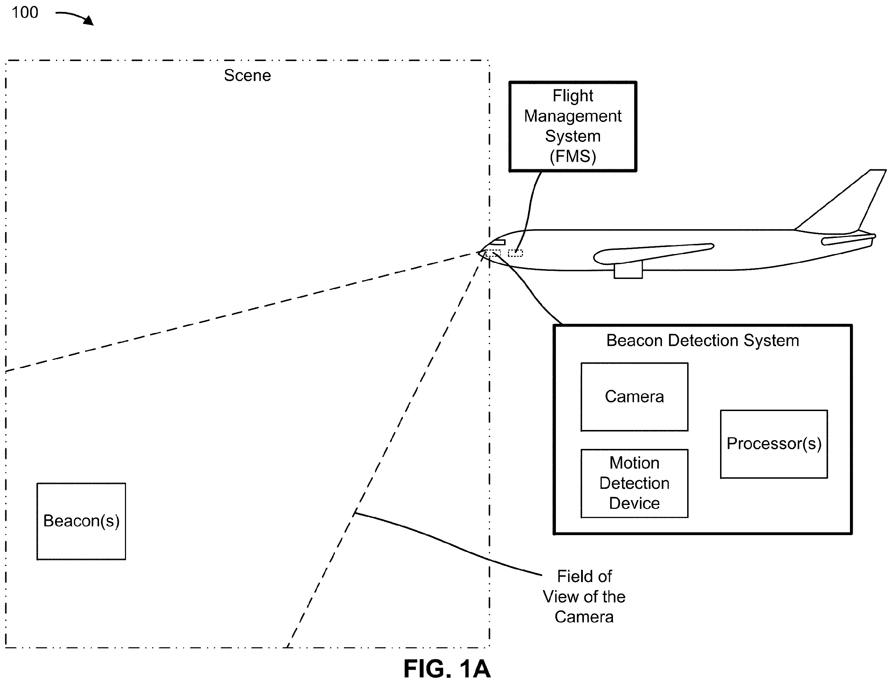

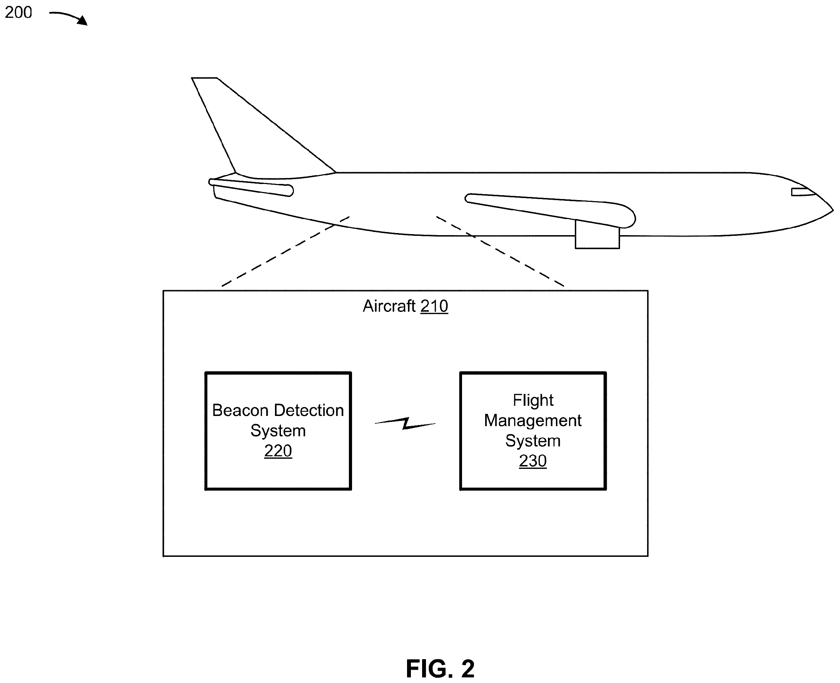

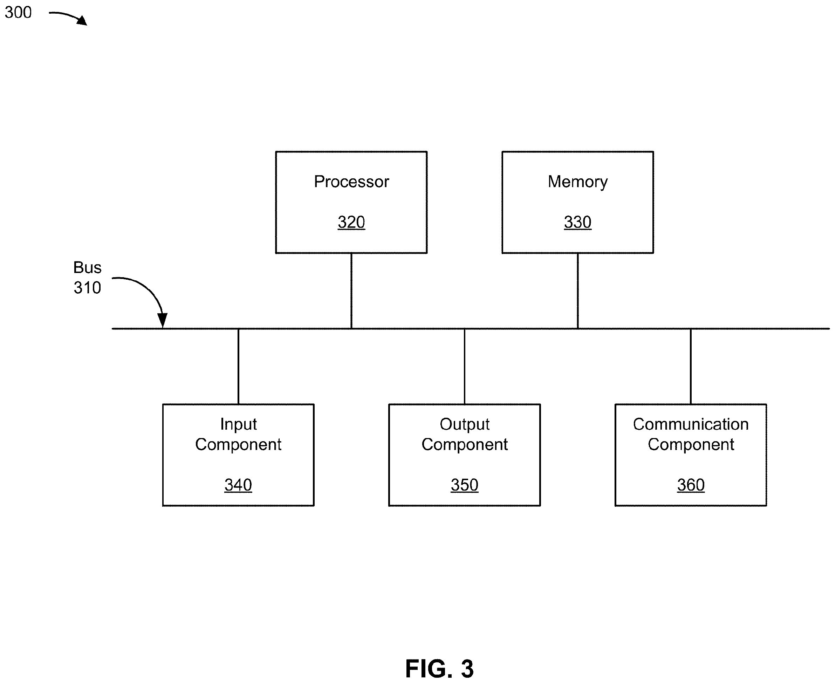

Figs. 1A-1F are diagrams of an example implementation 100 associated with a beacon detection system. As shown in Figs. 1A-1F, example implementation 100 comprises an aircraft that includes a beacon detection system and an FMS. These systems and devices are described in more detail below in connection with Fig. 2 and Fig. 3. As shown in Fig. 1A, the beacon detection system includes a camera, a motion detection device (e.g., that is associated with the camera), and/or one or more processors.

The camera of the beacon detection system includes a lens, an image sensor, at least one processing unit, and/or other components, and is configured to capture a video feed associated with a field of view of the camera. The video feed includes a stream of video frames (e.g., one or more video frames), which depicts a scene present in the field of view of the camera. The video feed comprises a plurality of regions (e.g., the video feed is divided into a group of regions) that collectively depict details of the scene. Each region, for example, is associated with a pixel cluster of the video feed (e.g., that comprises a pixel, or a group of connected pixels, of the video feed).

In some implementations, the field of view of the camera is associated with an attitude of the aircraft. That is, the camera is fixed relative to a frame of reference of the aircraft, and is pointed in a same direction as the aircraft's forward orientation (e.g., when the aircraft is flying). Thus, the camera is oriented to capture the video feed in a direction of flight of the aircraft.

The camera is configured to have a capture rate (e.g., measured in frames per second). The capture rate is greater than or equal to twice a particular frequency, such as a beacon frequency further described herein. That is, the camera is configured to accurately identify modulated light emitted by at least one beacon (e.g., that is modulated at the beacon frequency), and therefore is configured to have a capture rate that is able to accurately distinguish the beacon frequency (e.g., per the Nyquist theorem).

The motion detection device include an accelerometer, a gyroscope, an inertial measurement unit, an optical flow sensor, and/or other components, and is configured to capture motion information associated with the camera (e.g., that indicates a motion, such as a shake, or a vibration, along with other examples, of the camera). For example, the motion detection device is connected to the camera and detects changes in orientation, position, or velocity of the camera. Accordingly, particular motion data, of the motion information, is associated with a particular sequence of video frames (e.g., of one or more video frames) of the video feed. That is, both the particular motion data and the particular sequence of video frames are associated with a time range, and therefore the particular motion data indicates a motion of the camera during the time range when the camera captured the particular sequence of video frames.

The one or more processors are configured to control the beacon detection system. For example, the one or more processors are configured to control the camera (e.g., to capture a video feed) and/or the motion detection device (e.g., to capture motion information), and are configured to perform one or more other operations described herein, such as determining a set of one or more regions, of a plurality of regions of the video feed, that are associated with a particular frequency (e.g., the beacon frequency).

As further shown in Fig. 1A, a scene includes at least one beacon. Each beacon is configured to emit light (e.g., visible light, or non-visible light), such as in the form of modulated light (e.g., blinking light), which is modulated at a beacon frequency. The beacon frequency is a particular frequency that indicates that the light originates from a beacon, as compared to another light source. Accordingly, the beacon frequency is greater than a frequency of typical modulated light sources (e.g., that have a modulation frequency within a range of 50-60 Hz), such as to clearly distinguish light emitted from a beacon as compared to another light source. For example, the beacon frequency is greater than or equal to at least one of 75 Hz, 80 Hz, 85 Hz, 90 Hz, 95 Hz, 100 Hz, 105 Hz, or 110 Hz.

In some implementations, the scene includes a plurality of beacons that are phase-synchronized. That is, the plurality of beacons are configured to emit light with oscillation patterns that are aligned in time. Accordingly, each beacon is configured to emit phase-synchronized, modulated light, which is modulated at the beacon frequency.

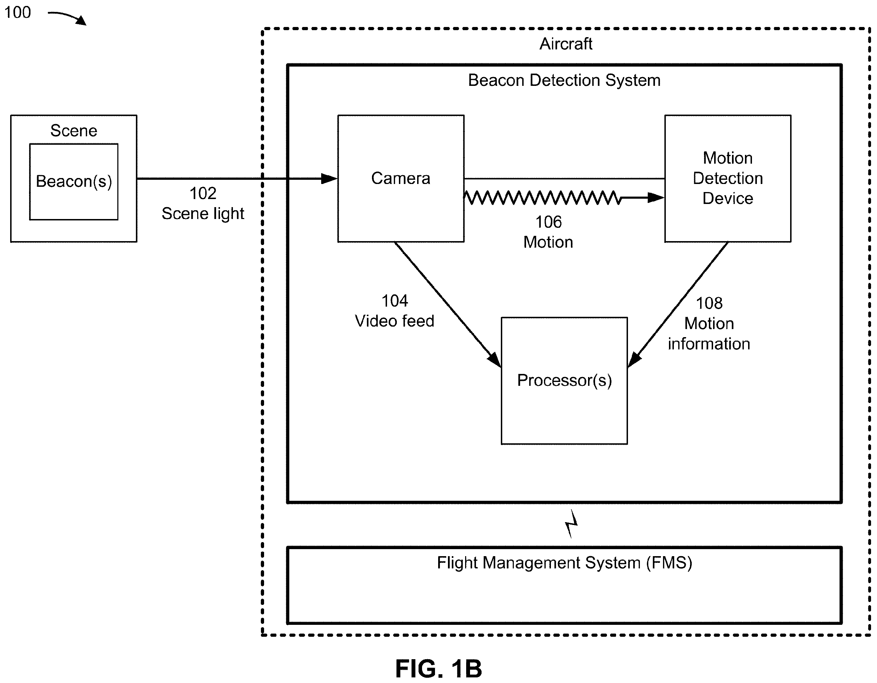

As shown in Fig. 1B, and by reference number 102, the camera of the beacon detection system receives scene light (e.g., when the scene is in the field of view of the camera). That is, light emanates from the scene and propagates, via the lens of the camera, to the image sensor of the camera. Because the scene includes at least one beacon, at least some of the light that is received by the camera includes light that is emitted by the at least one beacon and that is therefore modulated at the beacon frequency.

As shown by reference number 104, the camera captures a video feed and provides the video feed to the one or more processors. The video feed depicts the scene that includes the at least one beacon. The camera captures the video feed when the aircraft is flying, and thus the video feed depicts the scene as associated with a direction of flight of the aircraft. Accordingly, one or more regions, of a plurality of regions, of the video feed are associated with the beacon frequency. That is, the one or more regions of the video feed depict light that is emitted by the at least one beacon that is modulated at the beacon frequency.

In some implementations, the one or more processors cause the camera to capture the video feed and provide the video feed to the one or more processors. For example, the one or more processors sends, via a communication connection between the one or more processors and the camera, control information to the camera, and the camera, in response to the control information, captures the video feed. Accordingly, the camera sends (e.g., in real-time, or near-real time), via the communication connection, the video feed to the one or more processors. In this way, the one or more processors obtain the video feed.

As further shown in Fig. 1B, and by reference number 106, the camera, and therefore the motion detection device (e.g., because the motion detection device is connected to the camera) experience motion (e.g., as a result of the flight of the aircraft). For example, the camera and the motion detection device experience, during the flight of the aircraft, vibrational motion generated by a propulsion system of the aircraft and/or by aerodynamic forces on the aircraft.

As shown by reference number 108, the motion detection device captures motion information and provides the motion information to the one or more processors. The motion information indicates a motion of the camera, such as a shake, or a vibration, along with other examples, of the camera, such as when the camera captures the video feed. Accordingly, the motion data indicates a motion of the camera while the camera captures the video feed.

In some implementations, the one or more processors cause the motion detection device to capture the motion information. For example, the one or more processors send, via a communication connection between the one or more processors and the motion detection device, control information to the motion detection device, and the motion detection device, in response to the control information, captures the motion information. Accordingly, the motion detection device sends (e.g., in real-time, or near-real time), via the communication connection, the motion information to the one or more processors. In this way, the one or more processors obtain the motion information.

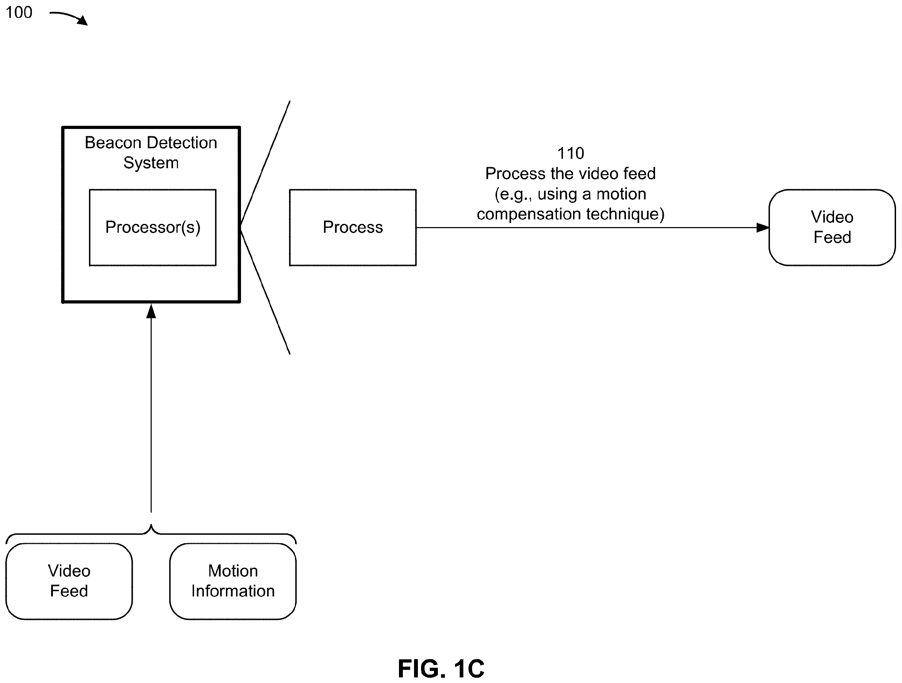

As shown in Fig. 1C, and by reference number 110, the beacon detection system (e.g., using the one or more processors) processes the video feed (e.g., that is captured by the camera and provided to the one or more processors). The beacon detection system processes the video feed using a motion compensation technique (e.g., an image stabilization technique, a motion smoothing technique, or an optical flow technique, along with other examples), such as to cause the video feed to be stabilized (e.g., where the motion experienced by the camera, as described herein in relation to Fig. 1B and reference number 106, is corrected or minimized to cause the video feed to appear smooth and/or steady). The beacon detection system uses the video feed and/or the motion information (e.g., that is captured by the motion detection device and provided to the one or more processors) as input to the motion compensation technique to cause the video feed to be stabilized.

For example, the beacon detection system (e.g., using the one or more processors) identifies a sequence of video frames of the video feed (e.g., that is associated with a time range) and identifies motion data, of the motion information, that is associated with the sequence of video frames (e.g., that is also associated with the time range). Accordingly, the beacon detection system (e.g., using the one or more processors) processes, using the motion compensation technique, and based on the motion data, the sequence of video frames to stabilize the sequence of video frames. In this way, by stabilizing one or more sequences of video frames of the video feed, the beacon detection system stabilizes the video feed.

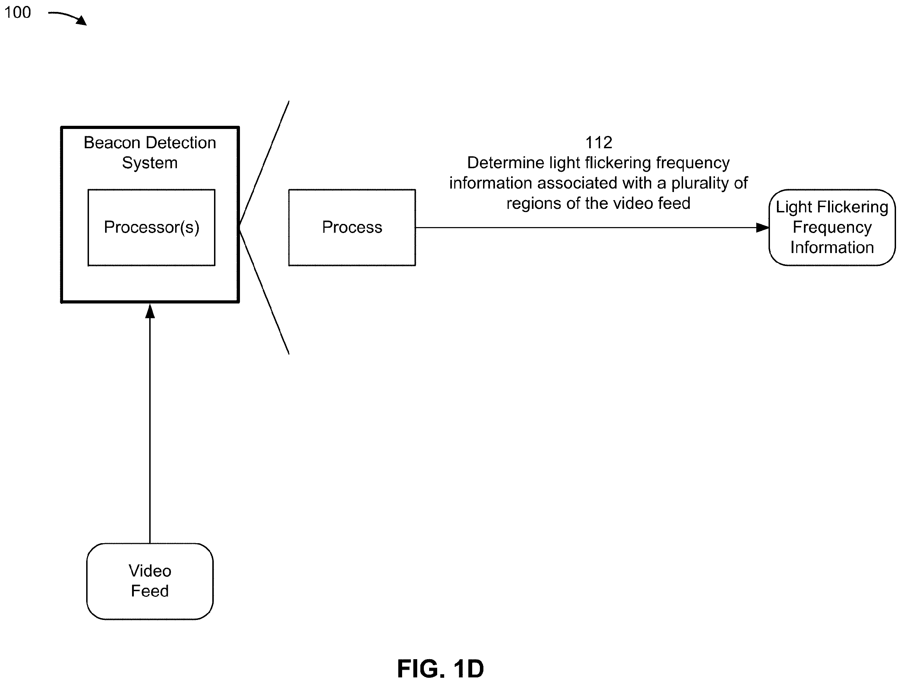

As shown in Fig. 1D, and by reference number 112, the beacon detection system (e.g., using the one or more processors) determines light flickering frequency information associated with a plurality of regions (e.g., a plurality of pixel clusters) of the video feed. For example, the beacon detection system (e.g., using the one or more processors) determines, for each region (e.g., each pixel cluster), of the plurality of regions, of the video feed, temporal intensity variation data associated with a sequence of video frames of the video feed. The temporal intensity variation data indicates, for the region, how much an intensity of light appears to vary (e.g., flicker) during a time period associated with the sequence of video frames, which indicates a modulation frequency of light depicted by the region. This is referred to herein as a temporal intensity variation of the region. Accordingly, the beacon detection system (e.g., using the one or more processors) generates the light flickering frequency information to indicate the temporal intensity variation data for each region, of the plurality of regions, of the video feed.

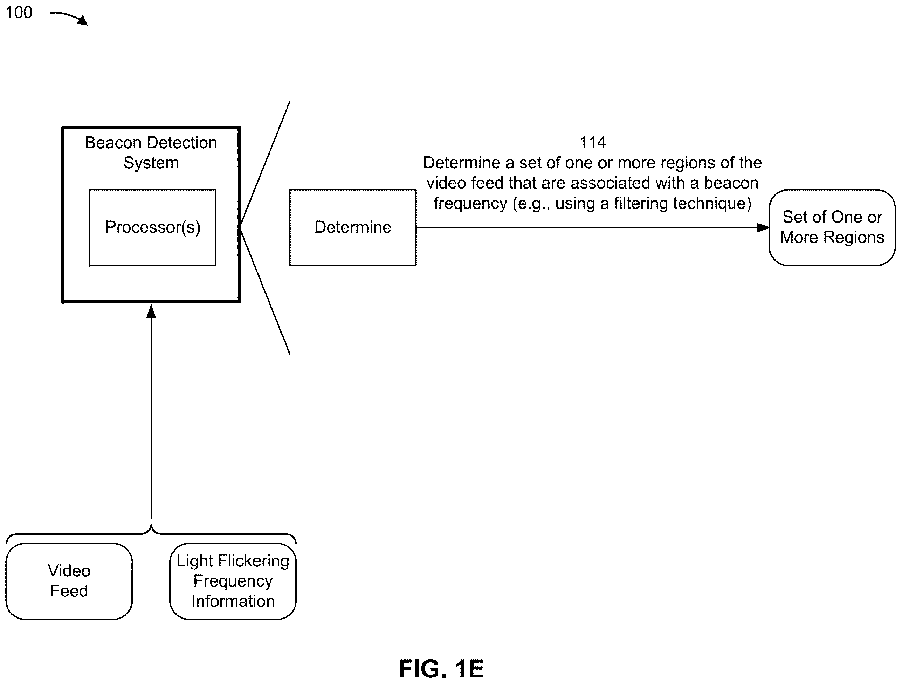

As shown in Fig. 1E, and by reference number 114, the beacon detection system (e.g., using the one or more processors) determines a set of one or more regions, of the plurality of regions, of the video feed that are associated with a particular frequency, such as the beacon frequency. In some implementations, the beacon detection system uses a filtering technique to determine the set of one or more regions that are associated with the particular frequency. For example, the beacon detection system (e.g., using the one or more processors) processes the light flickering frequency information using the filtering technique to identify at least one region, of the plurality of regions of the video feed, that has a temporal intensity variation that matches (e.g., is equal to, within a tolerance, such as 1, 2, or 3 Hz) the beacon frequency. The beacon detection system (e.g. using the one or more processors) then determines the set of one or more regions as including the at least one region (e.g., that has a temporal intensity variation that matches the particular frequency). In some implementations, the filtering technique is associated with the particular frequency. For example, the filtering technique includes utilization of a band-pass filter with the particular frequency set as a center frequency of the band-pass filter. Thus, the beacon detection system determines the set of one or more regions based on applying the band-pass filter to the light flickering frequency information.

Accordingly, when the particular frequency is the beacon frequency, the beacon detection system (e.g., using the one or more processors) determines a set of one or more regions, of the plurality of regions, of the video feed that are associated with the beacon frequency. Thus, the set of one or more regions depict light that is modulated at the beacon frequency and that, therefore, emanated from the at least one beacon of the scene.

In some implementations, the beacon detection system determines the set of one or more regions as including multiple regions, wherein each region is associated with the particular frequency (e.g., the beacon frequency) and is phase-synchronized with other regions of the multiple regions. For example, as part of processing the light flickering frequency information using the filtering technique, the beacon detection system identifies multiple regions that have temporal intensity variations that match the particular frequency and that are phase-synchronized with each other. In this way, the beacon detection system determines a set of multiple regions, of the plurality of regions, of the video feed that are phase-synchronized and that are associated with the beacon frequency. Thus, in some implementations, the set of multiple phase-synchronized regions depict phase-synchronized light that is modulated at the beacon frequency and that, therefore, emanated from a plurality of phase-synchronized beacons.

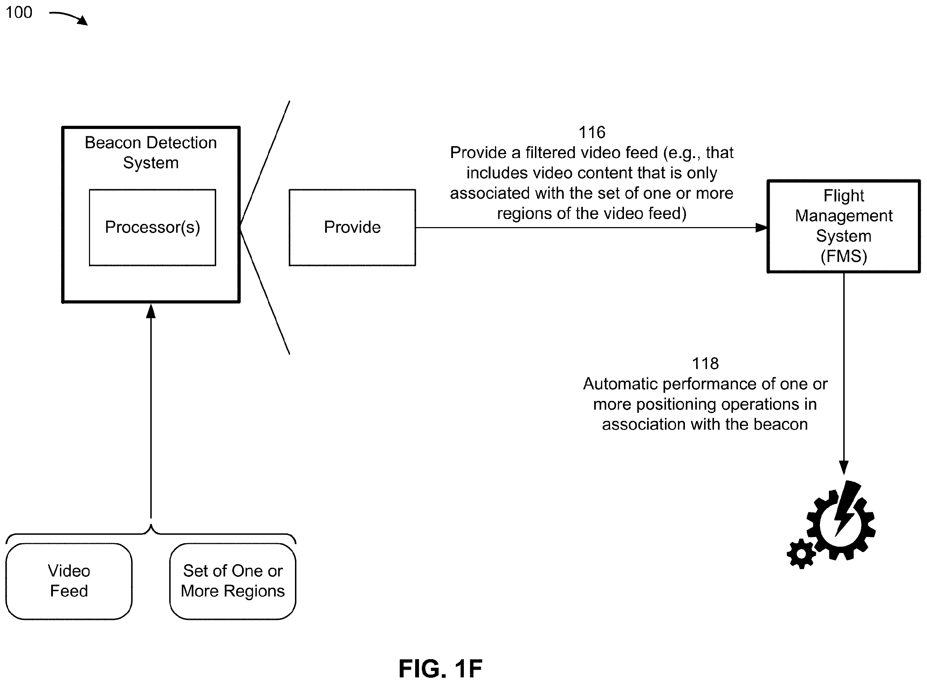

As shown in Fig. 1F, and by reference number 116, the beacon detection system (e.g., using the one or more processors) provides a filtered video feed. The filtered video feed includes video content of the video feed that is only associated with the set of one or more regions of the video feed that are associated with the particular frequency (e.g., the beacon frequency). That is, in some implementations, the filtered video depicts video content of the video feed associated with the set of one or more regions of the video feed that depict light that is modulated at the beacon frequency (and that therefore emanated from the at least one beacon of the scene). In some implementations, when the set of one or more regions of the video feed includes a set of multiple regions of the video feed that are phase-synchronized and that are associated with the particular frequency (e.g., the beacon frequency), the filtered video feed includes video content of the video that is only associated with the set of multiple regions. That is, in some implementations, the filtered video depicts video content of the video feed associated with the set of multiple regions of the video feed that depict light that is phase-synchronized and that is modulated at the beacon frequency (and that therefore emanated from the plurality of phase-synchronized beacons of the scene).

To provide the filtered video feed, the beacon detection system transmits the filtered video feed to another system or device (e.g., of the aircraft). For example, as shown in Fig. 1F, the beacon detection system (e.g., using the one or more processors) provides the filtered video feed to the FMS of the aircraft by transmitting the filtered video feed to the FMS, such as via a communication connection between the beacon detection system and the FMS. In this way, the FMS obtains the filtered video feed.

In some implementations, to generate the filtered video, the beacon detection system (e.g., using the one or more processors) generates a video mask (e.g., for the video feed). The video mask is associated with regions of the video feed that are not associated with the set of one or more regions of the video feed that are associated with the particular frequency (e.g., the beacon frequency). For example, the video mask blacks out, or otherwise obscures, the regions of the video feed that are not associated with the set of one or more regions of the video feed that depict light modulated at the beacon frequency (e.g., that emanated from the at least one beacon). In some implementations, the video mask is associated with regions of the video feed that are not associated with the set of multiple regions of the video feed that are phase-synchronized and that are associated with the beacon frequency. For example, the video mask blacks out, or otherwise obscures, the regions of the video feed that are not associated with the set of multiple regions of the video feed that depict phase-synchronized light modulated at the beacon frequency (e.g., that emanated from a plurality of phase-synchronized beacons). Accordingly, the beacon detection system (e.g., using the one or more processors) applies the video mask to the video feed to generate the filtered video feed.

As further shown in Fig. 1F, and by reference number 118, the aircraft automatically performs (e.g., based on the filtered video being provided) one or more positioning operations in association with the at least one beacon (e.g., of the scene) that is modulated at the particular frequency (e.g., the beacon frequency) and that is depicted by the filtered video feed (e.g., because the filtered video depicts video content of the video feed associated with the set of one or more regions of the video feed that depict light modulated at the particular frequency). For example, the FMS analyzes the filtered video feed to identify and/or track an observed position and/or orientation of the at least one beacon with respect to the aircraft (e.g., with respect to the forward orientation of the aircraft). Accordingly, based on the observed position and/or orientation, the FMS causes the aircraft to perform one or more positioning operations in association with the at least one beacon, such as guide the aircraft to a landing area or airspace associated with the at least one beacon, maintain a fixed position of the aircraft relative to the at least one beacon, and/or adjust a flight path to avoid an obstacle associated with the at least one beacon, along with other examples.

In some implementations, the aircraft automatically performs (e.g., based on the filtered video being provided) one or more positioning operations in association with the plurality of phase-synchronized beacons (e.g., of the scene) that are phase-synchronized and modulated at the particular frequency (e.g., the beacon frequency) and that is depicted by the filtered video feed (e.g., because the filtered video depicts video content of the video feed associated with the set of multiple regions of the video feed that depict phase-synchronized light that is modulated at the particular frequency). For example, the FMS analyzes the filtered video feed to identify and/or track an observed position and/or orientation of the the plurality of phase-synchronized beacons with respect to the aircraft (e.g., with respect to the forward orientation of the aircraft). Accordingly, based on the observed position and/or orientation, the FMS causes the aircraft to perform one or more positioning operations in association with the plurality of phase-synchronized beacons, such as guide the aircraft to a landing area or airspace associated with the plurality of phase-synchronized beacons, maintain a fixed position of the aircraft relative to the plurality of phase-synchronized beacons, and/or adjust a flight path to avoid an obstacle associated with the plurality of phase-synchronized beacons, along with other examples.

As indicated above, Figs. 1A-1E are provided as an example. Other examples differ from what is described with regard to Figs. 1A-1E. The number and arrangement of devices and systems shown in Figs. 1A-1E are provided as an example. In practice, there may be additional devices and systems, fewer devices and systems, different devices and systems, or differently arranged devices and systems than those shown in Figs. 1A-1E. Furthermore, two or more devices and/or systems shown in Figs. 1A-1E may be implemented within a single device or system, or a single device or system shown in Figs. 1A-1E may be implemented as multiple, distributed devices and/or systems. Additionally, or alternatively, a set of devices and/or systems (e.g., one or more devices and/or systems) shown in Figs. 1A-1E may perform one or more functions described as being performed by another set of devices and/or systems shown in Figs. 1A-1E.

Fig. 2 is a diagram of an example environment 200 in which systems and/or methods described herein are implemented. As shown in Fig. 2, environment 200 includes an aircraft 210, a beacon detection system 220, and/or an FMS 230. Devices of environment 200 interconnect via wired connections, wireless connections, or a combination of wired and wireless connections.

The aircraft 210 includes any suitable vehicle and/or device capable of flight. The aircraft 210 includes, for example, an airplane (e.g., a jet airplane, a propeller airplane, a glider airplane, or the like), a helicopter, an unmanned or uncrewed aerial vehicle (UAV), a drone, a rocketship, a spaceship, a space shuttle, an airship, or a blimp, along with other examples of aerial vehicles and/or aerial devices capable of flight.

The beacon detection system 220 includes one or more devices capable of receiving, generating, storing, transmitting, processing, and/or providing information, as described elsewhere herein. The beacon detection system 220 comprises a camera that is configured to capture a video feed, a motion detection device that is configured to capture motion information, and/or one or more processors configured to process the video feed and/or the motion information, as described herein. In some implementations, the beacon detection system 220 includes a computing device, such as a wireless communication device, a mobile phone, a user equipment, a laptop computer, a tablet computer, a desktop computer, or a similar type of device.

The FMS 230 includes one or more devices capable of receiving, generating, storing, transmitting, processing, and/or providing information, as described elsewhere herein. The FMS 230 includes one or more devices, such as a flight management computer (FMC), a control display unit (CDU), and/or other devices that automate one or more of flight planning, navigation, and operational tasks of the aircraft 210. In some implementations, the FMS 230 is configured to cause the aircraft 210 to perform one or more positioning operations in association with at least one beacon, as described herein.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

Fig. 3 is a diagram of example components of a device 300 associated with a beacon detection system. The device 300 corresponds to the aircraft 210, the beacon detection system 220, and/or the FMS 230. In some implementations, the aircraft 210, the beacon detection system 220, and/or the FMS 230 includes one or more devices 300 and/or one or more components of the device 300. As shown in Fig. 3, the device 300 includes a bus 310, a processor 320, a memory 330, an input component 340, an output component 350, and/or a communication component 360.

The bus 310 includes one or more components that enable wired and/or wireless communication among the components of the device 300. The bus 310 couples together two or more components of Fig. 3, such as via operative coupling, communicative coupling, electronic coupling, and/or electric coupling. For example, the bus 310 includes an electrical connection (e.g., a wire, a trace, and/or a lead) and/or a wireless bus. The processor 320 includes a central processing unit, a graphics processing unit, a microprocessor, a controller, a microcontroller, a digital signal processor, a field-programmable gate array, an application-specific integrated circuit, and/or another type of processing component. The processor 320 is implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory. For example, the memory 330 includes random access memory (RAM), read only memory (ROM), a hard disk drive, and/or another type of memory (e.g., a flash memory, a magnetic memory, and/or an optical memory). The memory 330 includes internal memory (e.g., RAM, ROM, or a hard disk drive) and/or removable memory (e.g., removable via a universal serial bus connection). In some implementations, the memory 330 is a non-transitory computer-readable medium. The memory 330 stores information, one or more instructions, and/or software (e.g., one or more software applications) related to the operation of the device 300. In some implementations, the memory 330 includes one or more memories that are coupled (e.g., communicatively coupled) to one or more processors (e.g., processor 320), such as via the bus 310. Communicative coupling between a processor 320 and a memory 330 enables the processor 320 to read and/or process information stored in the memory 330 and/or to store information in the memory 330.

The input component 340 enables the device 300 to receive input, such as user input and/or sensed input. For example, the input component 340 includes a touch screen, a keyboard, a keypad, a mouse, a button, a microphone, a switch, a sensor, a global positioning system sensor, a global navigation satellite system sensor, an accelerometer, a gyroscope, and/or an actuator. The output component 350 enables the device 300 to provide output, such as via a display, a speaker, and/or a light-emitting diode. The communication component 360 enables the device 300 to communicate with other devices via a wired connection and/or a wireless connection. For example, the communication component 360 includes a receiver, a transmitter, a transceiver, a modem, a network interface card, and/or an antenna.

The device 300 performs one or more operations or processes described herein. For example, a non-transitory computer-readable medium (e.g., memory 330) stores a set of instructions (e.g., one or more instructions or code) for execution by the processor 320. The processor 320 executes the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry is used instead of or in combination with the instructions to perform one or more operations or processes described herein. Additionally, or alternatively, the processor 320 is configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

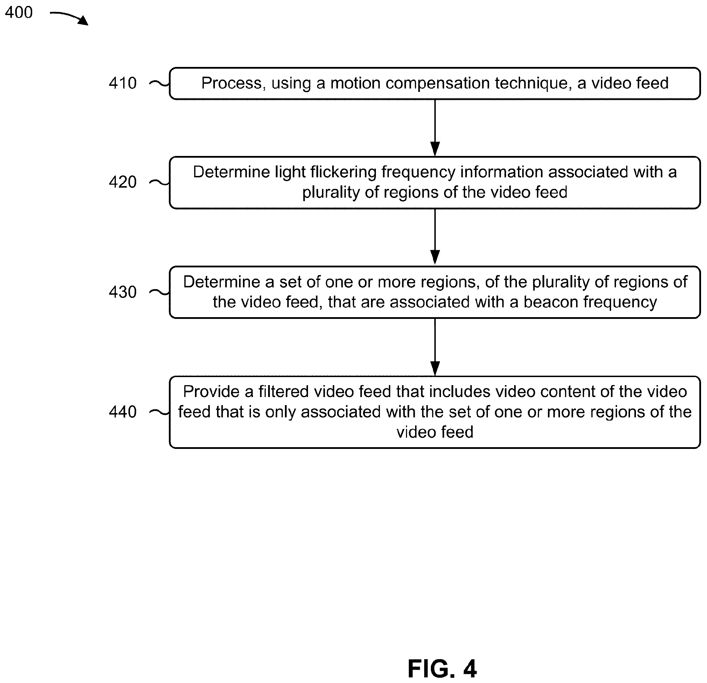

Fig. 4 is a flowchart of an example process 400 associated with a beacon detection system. In some implementations, one or more process blocks of Fig. 4 are performed by a system (e.g., the beacon detection system 220) of an aircraft (e.g., the aircraft 210). In some implementations, one or more process blocks of Fig. 4 are performed by another device or a group of devices separate from or including the beacon detection system, such as another system (e.g., the FMS 230) of the aircraft. Additionally, or alternatively, one or more process blocks of Fig. 4 are performed by one or more components of device 300, such as processor 320, memory 330, input component 340, output component 350, and/or communication component 360.

As shown in Fig. 4, process 400 includes processing, using a motion compensation technique, a video feed captured by the camera (block 410). For example, the system processes, using a motion compensation technique, a video feed captured by the camera, as described above.

As further shown in Fig. 4, process 400 includes determining light flickering frequency information associated with a plurality of regions of the video feed (block 420). For example, the system determines light flickering frequency information associated with a plurality of regions of the video feed, as described above.

As further shown in Fig. 4, process 400 includes determining a set of one or more regions, of the plurality of regions of the video feed, that are associated with the beacon frequency (block 430). For example, the system determines, a set of one or more regions, of the plurality of regions of the video feed, that are associated with the beacon frequency, as described above. The system determines the set of one or more regions that are associated with the beacon frequency using a filtering technique associated with the beacon frequency and based on the light flickering frequency information.

As further shown in Fig. 4, process 400 includes providing a filtered video feed that includes video content of the video feed that is only associated with the set of one or more regions of the video feed (block 440). For example, the system provides a filtered video feed that includes video content of the video feed that is only associated with the set of one or more regions of the video feed, as described above. The system provides the filtered video feed to a flight management system of the aircraft.

Process 400 may include additional implementations, such as any single implementation or any combination of implementations described below and/or in connection with one or more other processes described elsewhere herein.

In a first implementation, providing the filtered video feed includes transmitting the filtered video feed to the flight management system to cause the aircraft to automatically perform one or more positioning operations in association with at least one beacon that is modulated at the beacon frequency and that is depicted by the filtered video feed.

In a second implementation, alone or in combination with the first implementation, processing the video feed includes identifying a sequence of video frames of the video feed, identifying motion data, of motion information captured by the motion detection device, that is associated with the sequence of video frames, and processing, using a motion compensation technique, and based on the motion data, the sequence of video frames to stabilize the sequence of video frames.

In a third implementation, alone or in combination with one or more of the first and second implementations, determining the light flickering frequency information includes determining, for each region, of the plurality of regions of the video feed, temporal intensity variation data associated with a sequence of video frames of the video feed, and generating the light flickering frequency information to indicate the temporal intensity variation data for each region of the plurality of regions of the video feed.

In a fourth implementation, alone or in combination with one or more of the first through third implementations, the filtering technique includes utilization of a band-pass filter with the beacon frequency set as a center frequency of the band-pass filter.

In a fifth implementation, alone or in combination with one or more of the first through fourth implementations, determining the set of one or more regions includes processing the light flickering frequency information using the filtering technique to identify at least one region, of the plurality of regions of the video feed, that has a temporal intensity variation that matches the beacon frequency, and determining the set of one or more regions as including the at least one region.

In a sixth implementation, alone or in combination with one or more of the first through fifth implementations, providing the filtered video feed includes generating a video mask associated with regions of the video feed that are not associated with the set of one or more regions, applying the video mask to the video feed to generate the filtered video feed, and transmitting the filtered video feed to the flight management system via a communication connection between the beacon detection system and the flight management system.

In a seventh implementation, alone or in combination with one or more of the first through sixth implementations, each region, of the plurality of regions of the video feed, is associated with a pixel cluster of the video feed.

In an eighth implementation, alone or in combination with one or more of the first through seventh implementations, a capture rate of the camera is greater than or equal to twice the beacon frequency.

In a ninth implementation, alone or in combination with one or more of the first through eighth implementations, the motion detection device includes at least one of an accelerometer, a gyroscope, an inertial measurement unit, or an optical flow sensor.

Although Fig. 4 shows example blocks of process 400, in some implementations, process 400 includes additional blocks, fewer blocks, different blocks, or differently arranged blocks than those depicted in Fig. 4. Additionally, or alternatively, two or more of the blocks of process 400 may be performed in parallel.

The foregoing disclosure provides illustration and description, but is not intended to be exhaustive or to limit the implementations described herein to the precise forms that are described. Modifications and variations may be made in light of the above description or may be acquired from practice of the implementations described herein.

As used herein, the term "component" is intended to be broadly construed as hardware, firmware, and/or a combination of hardware and software. It will be apparent that systems and/or methods described herein may be implemented in different forms of hardware, firmware, or a combination of hardware and software. The actual specialized control hardware or software code used to implement these systems and/or methods is not limiting of the implementations described herein. Thus, the operation and behavior of the systems and/or methods are described herein without reference to specific software code-it being understood that software and hardware can be designed to implement the systems and/or methods based on the description herein.

Even though particular combinations of features are recited in the claims and/or described in the specification, these combinations are not intended to limit the implementations described herein. In fact, many of these features may be combined in ways not specifically recited in the claims and/or described in the specification. Although each dependent claim listed below may directly depend on only one claim, the description includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a component" or "one or more components" (or another element, such as "a processor" or "one or more processors") is described or claimed (within a single claim or across multiple claims) as performing multiple operations or being configured to perform multiple operations, this language is intended to broadly cover a variety of architectures and environments. For example, unless explicitly claimed otherwise (e.g., via the use of "first component" and "second component" or other language that differentiates components in the claims), this language is intended to cover a single component performing or being configured to perform all of the operations, a group of components collectively performing or being configured to perform all of the operations, a first component performing or being configured to perform a first operation and a second component performing or being configured to perform a second operation, or any combination of components performing or being configured to perform the operations. For example, when a claim has the form "one or more components configured to: perform X; perform Y; and perform Z," that claim should be interpreted to mean "one or more components configured to perform X; one or more (possibly different) components configured to perform Y; and one or more (also possibly different) components configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items,), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

Further, the present disclosure comprises aspects according to the following clauses.
Clause 1. A beacon detection system of an aircraft, comprising:
   a camera with a field of view that is associated with an attitude of the aircraft;
   a motion detection device associated with the camera; and
   one or more processors configured to:
      process, using a motion compensation technique, a video feed captured by the camera;
      determine light flickering frequency information associated with a plurality of regions of the video feed;
      determine, using a filtering technique associated with a beacon frequency, and based on the light flickering frequency information, a set of one or more regions, of the plurality of regions of the video feed, that are associated with the beacon frequency; and
      provide, to a flight management system of the aircraft, a filtered video feed that includes video content of the video feed that is only associated with the set of one or more regions of the video feed.
Clause 2. The beacon detection system of clause **1,** wherein the one or more processors, to provide the filtered video feed, are configured to:
   transmit the filtered video feed to the flight management system to cause the aircraft to automatically perform one or more positioning operations in association with at least one beacon that is modulated at the beacon frequency and that is depicted by the filtered video feed.
Clause 3. The beacon detection system of clause **1,** wherein the one or more processors, to process the video feed, are configured to:
   identify a sequence of video frames of the video feed;
   identify motion data, of motion information captured by the motion detection device, that is associated with the sequence of video frames; and
   process, using a motion compensation technique, and based on the motion data, the sequence of video frames to stabilize the sequence of video frames.
Clause 4. The beacon detection system of clause 1, wherein the one or more processors, to determine the light flickering frequency information, are configured to:
   determine, for each region, of the plurality of regions of the video feed, temporal intensity variation data associated with a sequence of video frames of the video feed; and
   generate the light flickering frequency information to indicate the temporal intensity variation data for each region of the plurality of regions of the video feed.
Clause 5. The beacon detection system of clause **1,** wherein the filtering technique includes utilization of a band-pass filter with the beacon frequency set as a center frequency of the band-pass filter.
Clause 6. The beacon detection system of clause **1,** wherein the one or more processors, to determine the set of one or more regions, of the plurality of regions of the video feed, that are associated with the beacon frequency, are configured to:
   process the light flickering frequency information using the filtering technique to identify at least one region, of the plurality of regions of the video feed, that has a temporal intensity variation that matches the beacon frequency; and
   determine the set of one or more regions as including the at least one region.
Clause 7. The beacon detection system of clause **1,** wherein the one or more processors, to provide the filtered video feed, are configured to:
   generate a video mask associated with regions of the video feed that are not associated with the set of one or more regions;
   apply the video mask to the video feed to generate the filtered video feed; and
   transmit the filtered video feed to the flight management system via a communication connection between the beacon detection system and the flight management system.
Clause 8. The beacon detection system of clause **1,** wherein each region, of the plurality of regions of the video feed, is associated with a pixel cluster of the video feed.
Clause 9. The beacon detection system of clause **1,** wherein a capture rate of the camera is greater than or equal to twice the beacon frequency.
Clause 10. The beacon detection system of clause **1,** wherein the motion detection device includes at least one of:
   an accelerometer;
   a gyroscope;
   an inertial measurement unit; or
   an optical flow sensor.
Clause 11. A non-transitory computer-readable medium storing a set of instructions, the set of instructions comprising:
   one or more instructions that, when executed by one or more processors of a system of an aircraft, cause the system to:
   determine light flickering frequency information associated with a plurality of regions of a video feed captured by a camera;
   determine, using a filtering technique associated with a particular frequency, and based on the light flickering frequency information, a set of one or more regions, of the plurality of regions of the video feed, that are associated with the particular frequency; and
   provide a filtered video feed that includes video content of the video feed that is only associated with the set of one or more regions of the video feed.
Clause 12. The non-transitory computer-readable medium of clause **11,** wherein the one or more instructions, that cause the system to determine the light flickering frequency information, cause the system to:
   process the video feed using a motion compensation technique; and
   determine the light flickering frequency information after processing the video feed.
Clause 13. The non-transitory computer-readable medium of clause 12, wherein the one or more instructions, that cause the system to process the video feed, cause the system to:
   process, using the motion compensation technique, and based on motion information captured by a motion detection device that is associated with the camera, a sequence of video frames of the video feed to stabilize the sequence of video frames.
Clause 14. The non-transitory computer-readable medium of clause 11, wherein the one or more instructions, that cause the system to determine the light flickering frequency information, cause the system to:
   determine, for each region, of the plurality of regions of the video feed, temporal intensity variation data.
Clause 15. The non-transitory computer-readable medium of clause 11, wherein the one or more instructions, that cause the system to determine the set of one or more regions, of the plurality of regions of the video feed, that are associated with the particular frequency, cause the system to:
   process the light flickering frequency information using the filtering technique to identify at least one region, of the plurality of regions of the video feed, that has a temporal intensity variation that matches the particular frequency.
Clause 16. The non-transitory computer-readable medium of claim 11, wherein the one or more instructions, that cause the system to determine the set of one or more regions, of the plurality of regions of the video feed, that are associated with the particular frequency, cause the system to:
   process the light flickering frequency information using the filtering technique to identify multiple regions, of the plurality of regions of the video feed, that have temporal intensity variations that match the particular frequency and that are phase-synchronized with each other.
Clause 17. The non-transitory computer-readable medium of clause **11,** wherein the one or more instructions, that cause the system to provide the filtered video feed, cause the system to:
   transmit the filtered video feed to cause the aircraft to automatically perform one or more positioning operations in association with at least one beacon that is modulated at the particular frequency and that is depicted by the set of one or more regions.
Clause 18. A method performed by a system of an aircraft, comprising:
   determining light flickering frequency information associated with a plurality of regions of a video feed captured by a camera;
   determining based on the light flickering frequency information, a set of one or more regions, of the plurality of regions of the video feed, that are associated with a beacon frequency; and
   providing video content of the video feed that is associated with the set of one or more regions of the video feed.
Clause 19. The method of clause 18, wherein providing video content of the video feed enables the aircraft to automatically perform one or more positioning operations.
Clause 20. The method of clause 18, wherein determining the set of one or more regions, of the plurality of regions of the video feed, that are associated with the beacon frequency comprises:
   processing the light flickering frequency information using a filtering technique to identify at least one region, of the plurality of regions of the video feed, that has a temporal intensity variation that matches the beacon frequency; and
   determining the set of one or more regions as including the at least one region.

## Claims

1. A beacon detection system (220) of an aircraft (210), comprising:
a camera with a field of view that is associated with an attitude of the aircraft (210);
a motion detection device associated with the camera; and
one or more processors (320) configured to:
process, using a motion compensation technique, a video feed captured by the camera;
determine light flickering frequency information associated with a plurality of regions of the video feed;
determine, using a filtering technique associated with a beacon frequency, and based on the light flickering frequency information, a set of one or more regions, of the plurality of regions of the video feed, that are associated with the beacon frequency; and
provide, to a flight management system (230) of the aircraft (210), a filtered video feed that includes video content of the video feed that is only associated with the set of one or more regions of the video feed.

2. The beacon detection system (220) of claim 1, wherein the one or more processors (320), to provide the filtered video feed, are configured to:
transmit the filtered video feed to the flight management system (230) to cause the aircraft (210) to automatically perform one or more positioning operations in association with at least one beacon that is modulated at the beacon frequency and that is depicted by the filtered video feed.

3. The beacon detection system (220) of any one of the preceding claims, wherein the one or more processors (320), to process the video feed, are configured to:
identify a sequence of video frames of the video feed;
identify motion data, of motion information captured by the motion detection device (300), that is associated with the sequence of video frames; and
process, using a motion compensation technique, and based on the motion data, the sequence of video frames to stabilize the sequence of video frames.

4. The beacon detection system (220) of any one of the preceding claims, wherein the one or more processors (320), to determine the light flickering frequency information, are configured to:
determine, for each region, of the plurality of regions of the video feed, temporal intensity variation data associated with a sequence of video frames of the video feed; and
generate the light flickering frequency information to indicate the temporal intensity variation data for each region of the plurality of regions of the video feed.

5. The beacon detection system (220) of any one of the preceding claims, wherein the filtering technique includes utilization of a band-pass filter with the beacon frequency set as a center frequency of the band-pass filter.

6. The beacon detection system (220) of any one of the preceding claims, wherein the one or more processors (320), to determine the set of one or more regions, of the plurality of regions of the video feed, that are associated with the beacon frequency, are configured to:
process the light flickering frequency information using the filtering technique to identify at least one region, of the plurality of regions of the video feed, that has a temporal intensity variation that matches the beacon frequency; and
determine the set of one or more regions as including the at least one region.

7. The beacon detection system (220) of claim 1, wherein the one or more processors (320), to provide the filtered video feed, are configured to:
generate a video mask associated with regions of the video feed that are not associated with the set of one or more regions;
apply the video mask to the video feed to generate the filtered video feed; and
transmit the filtered video feed to the flight management system (230) via a communication connection between the beacon detection system (220) and the flight management system (230).

8. The beacon detection system (220) of any one of the preceding claims, wherein each region, of the plurality of regions of the video feed, is associated with a pixel cluster of the video feed.

9. A non-transitory computer-readable medium (330) storing a set of instructions, the set of instructions comprising:
one or more instructions that, when executed by one or more processors (320) of a system (220) of an aircraft (210), cause the system (220) to:
determine light flickering frequency information associated with a plurality of regions of a video feed captured by a camera;
determine, using a filtering technique associated with a particular frequency, and based on the light flickering frequency information, a set of one or more regions, of the plurality of regions of the video feed, that are associated with the particular frequency; and
provide a filtered video feed that includes video content of the video feed that is only associated with the set of one or more regions of the video feed.

10. The non-transitory computer-readable medium (330) of claim 9, wherein the one or more instructions, that cause the system (220) to determine the light flickering frequency information, cause the system (220) to:
process the video feed using a motion compensation technique; and
determine the light flickering frequency information after processing the video feed.

11. The non-transitory computer-readable medium (330) of claim 10, wherein the one or more instructions, that cause the system (220) to process the video feed, cause the system (220) to:
process, using the motion compensation technique, and based on motion information captured by a motion detection device that is associated with the camera, a sequence of video frames of the video feed to stabilize the sequence of video frames.

12. The non-transitory computer-readable medium (330) of any one of claims 9-**11,** wherein the one or more instructions, that cause the system (220) to determine the light flickering frequency information, cause the system (220) to:
determine, for each region, of the plurality of regions of the video feed, temporal intensity variation data.

13. The non-transitory computer-readable medium (330) of any one of claims 9-12, wherein the one or more instructions, that cause the system (220) to determine the set of one or more regions, of the plurality of regions of the video feed, that are associated with the particular frequency, cause the system (220) to:
process the light flickering frequency information using the filtering technique to identify at least one region, of the plurality of regions of the video feed, that has a temporal intensity variation that matches the particular frequency.

14. The non-transitory computer-readable medium (330) of any one of claims 9-13, wherein the one or more instructions, that cause the system (220) to provide the filtered video feed, cause the system (220) to:
transmit the filtered video feed to cause the aircraft (210) to automatically perform one or more positioning operations in association with at least one beacon that is modulated at the particular frequency and that is depicted by the set of one or more regions.

15. A method performed by a system (220) of an aircraft (210), comprising:
determining light flickering frequency information associated with a plurality of regions of a video feed captured by a camera;
determining based on the light flickering frequency information, a set of one or more regions, of the plurality of regions of the video feed, that are associated with a beacon frequency; and
providing video content of the video feed that is associated with the set of one or more regions of the video feed.
